# DEMANDE DE BREVET EUROPEEN

(11) **EP 0 764 807 A1**
(43) Date de publication de la demande: **26.03.1997**
(21) Numéro de dépôt: 96114636.2
(22) Date de dépôt: 12.09.1996
(51) Int. Cl.: F16L 21/08, F16L 37/088, F16L 37/12

(54) **Procédé simplifié pour le raccordement coaxial de deux tubulures**

(30) Priorité: 20.09.1995 FR 9511044
(71) Demandeur: VALEO CLIMATISATION, 78321 La Verrière (FR)
(72) Inventeur: Martins, Carlos, 78490 Montfort l'Amaury (FR); Wurmser, Martin, 54000 Nancy (FR)
(74) Mandataire: Gamonal, Didier

(57) **Abrégé**

Une tubulure mâle (1) est munie d'une collerette (5) est emboîtée dans une tubulure femelle (2) munie d'un rebord radial (10). La collerette (5) est sollicitée axialement vers le rebord (10), en comprimant un joint annulaire d'étanchéité, par un collier de verrouillage (58) présentant une fente circonférentielle (64) dont les bords définissent des surfaces de contact pour la collerette et pour le rebord respectivement.
Application au raccordement des tubulures d'entrée et de sortie des radiateurs de refroidissement ou de chauffage dans les véhicules automobiles.

## Description

L'invention concerne un procédé pour le raccordement coaxial bout à bout de deux tubulures dans un circuit de fluide, par emboîtement d'une région d'extrémité d'une première desdites tubulures dans une région d'extrémité de la seconde tubulure, la région d'extrémité de la seconde tubulure présentant un épaulement intérieur tourné vers son extrémité de raccordement et un rebord radial décalé vers cette même extrémité par rapport à l'épaulement, et la région d'extrémité de la première tubulure présentant une collerette radialement extérieure propre a venir axialement en regard dudit épaulement, procédé dans lequel on sollicite axialement l'un vers l'autre ledit épaulement et ladite collerette, en serrant entre eux de façon étanche au fluide un joint annulaire d'étanchéité.

Un tel procédé est utilisé notamment pour établir un circuit de fluide caloporteur dans un véhicule automobile, et plus particulièrement pour raccorder une tubulure d'entrée ou de sortie d'un échangeur de chaleur, dans lequel le fluide doit échanger de la chaleur avec un autre milieu, et une conduite amenant le fluide dans ou hors de cet échangeur de chaleur.

Tel qu'il est mis en oeuvre jusqu'à présent, ce procédé utilise des dispositifs complexes comportant de nombreuses pièces, ce qui grève aussi bien le coût de fabrication de ces dispositifs que le coût de la main d'oeuvre pour les mettre en place.

Le but de l'invention est de remédier à cet inconvénient, et de proposer un procédé de raccordement utilisant des moyens très simples et peu coûteux, et lui-même simple et peu coûteux à mettre en oeuvre.

L'invention vise notamment un procédé du genre défini en introduction, et prévoit qu'on sollicite l'un vers l'autre l'épaulement et la collerette au moyen d'une pièce de verrouillage qui vient en contact avec le rebord, et avec la collerette, chacun par une ou plusieurs surfaces de contact s'étendant sur plus d'une demi-circonférence autour de l'axe de raccordement, la pièce de verrouillage étant déformée ou déplacée par rapport à l'une au moins des deux tubulures pour passer d'une position de déverrouillage, permettant son assemblage avec cette dernière tubulure, à sa position de verrouillage.

Par l'expression "s'étendant sur plus d'une demi-circonférence autour de l'axe de raccordement", on entend, dans le cas d'une surface de contact unique, que celle-ci s'étend de façon continue sur une longueur circonférentielle dépassant une demi-circonférence, et dans le cas de plusieurs surfaces de contact, que ces surfaces se situent dans leur ensemble de part et d'autre de n'importe quel plan passant par l'axe.

Des caractéristiques optionnelles de l'invention, complémentaires ou alternatives, sont énoncées ci-après :
- La collerette vient en butée axiale sur la face interne de la région d'extrémité de la seconde tubulure pour limiter le serrage du joint.
- Ledit rebord est tourné vers l'axe et situé axialement au-delà de la collerette par rapport à l'épaulement, et la pièce de verrouillage tend à écarter l'un de l'autre le rebord et la collerette.
- La pièce de verrouillage est un profilé incurvé autour de l'axe selon un arc de cercle dépassant un demi-cercle et comporte un jonc qui vient s'insérer entre le rebord et la collerette, la position de déverrouillage étant obtenue par un rétreint élastique qui rend le diamètre extérieur du jonc inférieur au diamètre intérieur du rebord.
- Ledit rebord est tourné à l'opposé de l'axe et situé axialement en-deçà de la collerette par rapport à l'épaulement, et la pièce de verrouillage tend à rapprocher l'un de l'autre le rebord et la collerette.
- La pièce de verrouillage présente une configuration annulaire et comporte quatre zones de section réduite délimitant deux ailes diamétralement opposées et definissant pour celles-ci des axes de pivotement par rapport au reste de la pièce, orientés tangentiellement, chaque aile présentant, de part et d'autre de son axe de pivotement dans la direction de l'axe de raccordement, une saillie d'accrochage définissant une surface de contact avec le rebord, et un bras de manoeuvre, le rapprochement mutuel des deux bras de manoeuvre amenant élastiquement la pièce dans sa position de déverrouillage.
- Le rebord comprend *n* régions radialement en saillie, *n* étant un nombre entier supérieur à 1, réparties autour de l'axe de raccordement et coopérant avec des surfaces de contact respectives de la pièce de verrouillage, et la pièce de verrouillage, sous forme d'une bague, pivote d'un *n*ième de tour pour passer de sa position de déverrouillage, dans laquelle chacune desdites surfaces de contact est en regard d'un vide entre deux desdites régions en saillie et chacune de ces mêmes régions est en regard d'un évidement de la bague, à sa position de verrouillage.
- La bague de verrouillage comprend deux couronnes décalées l'une par rapport à l'autre dans la direction axiale et définissant les surfaces de contact avec le rebord et avec la collerette respectivement, le rayon intérieur de la première couronne étant inférieur au rayon maximal desdites régions en saillie au droit des surfaces de contact avec celles-ci, et supérieur audit rayon maximal en des zones intermédiaires entre ces mêmes surfaces de contact pour définir lesdits évidements, les deux couronnes étant reliées entre elles par *n* branches au droit desdits évidements.
- La pièce de verrouillage est sous forme d'un collier ouvert, qu'on écarte pour l'amener dans sa position de déverrouillage où le rayon intérieur des surfaces de contact avec le rebord est supérieur au rayon extérieur de celui-ci.
- Après mise en place du collier de verrouillage on glisse autour de celui-ci une bague de retenue qui l'empêche de s'écarter de nouveau.
- Le collier de verrouillage et la bague de retenue forment initialement une seule pièce moulée dans laquelle ils se font suite dans la direction axiale et sont mutuellement reliés par au moins un élément frangible.
- Le collier de verrouillage est une bande dont la largeur est orientée selon l'axe de raccordement, incurvée autour de celui-ci pour former au moins deux régions en arcs de cercle reliées entre elles par une région en U faisant saillie radialement vers l'extérieur, et terminée par deux régions d'extrémités qui font également saillie radialement vers l'extérieur, une fente étant ménagée dans la bande le long de chaque région en arc de cercle, dont les deux bords définissent des surfaces de contact avec le rebord et avec la collerette respectivement.
- Chaque région en arc de cercle présente des rayons différents de part et d'autre de la fente, correspondant à des rayons différents du rebord et de la collerette.
- Après mise en place du collier de verrouillage on met en oeuvre un élément de retenue qui empêche l'écartement mutuel des deux régions d'extrémités de la bande.

L'invention a également pour objet un circuit de fluide, notamment pour la circulation d'un fluide caloporteur dans un véhicule automobile, comprenant deux tubulures raccordées coaxialement bout à bout par le procédé tel que défini ci-dessus, une région d'extrémité d'une première desdites tubulures étant emboîtée dans une région d'extrémité de la seconde tubulure, la région d'extrémité de la seconde tubulure présentant un épaulement intérieur tourné vers son extrémité de raccordement et un rebord radial décalé vers cette même extrémité par rapport à l'épaulement, et la région d'extrémité de la seconde tubulure présentant une collerette radialement extérieure propre à venir axialement en regard dudit épaulement, ledit épaulement et ladite collerette étant sollicités axialement l'un vers l'autre, en serrant entre eux de façon étanche au fluide un joint annulaire d'étanchéité, au moyen d'une pièce de verrouillage qui vient en contact avec le rebord, et avec la collerette, par une ou plusieurs surfaces de contact s'étendant sur plus d'une demi-circonférence autour de l'axe de raccordement.

L'invention vise encore une pièce de verrouillage utilisable pour la mise en oeuvre du procédé ci-dessus, présentant une ou plusieurs surfaces de contact s'étendant sur plus d'une demi-circonférence autour d'un axe et tournées dans un premier sens dans la direction de cet axe, pour venir en appui sur une collerette d'une première tubulure, et une ou plusieurs surfaces de contact s'étendant sur plus d'une demi-circonférence autour dudit axe et tournées dans le sens opposé au premier, pour venir en appui sur un rebord d'une seconde tubulure dans laquelle est emboîtée la première tubulure.

Une telle pièce de verrouillage peut être formée par une seule pièce moulée avec une bague de retenue, qui lui fait suite dans une direction axiale et lui est reliée par au moins un élément frangible, en vue d'un mode de réalisation particulier du procédé.

Les caractéristiques et avantages de l'invention seront exposés plus en détail dans la description ci-après, en se référant aux dessins annexés, sur lesquels :
- La figure 1 est une vue en coupe axiale d'un premier mode de réalisation d'un raccordement de tubulures réalisé par le procédé selon l'invention ;
- La figure 2 est une vue de dessus de la pièce de verrouillage utilisée dans ce raccordement ;
- Les figures 3 et 4 sont des vues analogues aux figures 1 et 2 respectivement, relatives à une variante de la pièce de verrouillage ;
- La figure 5 est une vue analogue à la figure 1, montrant un autre mode de réalisation du raccord de tubulures ;
- Les figures 6 et 7 sont des vues de côté et de dessus respectivement du raccordement de la figure 5 ;
- Les figures 8 et 10 sont des vues en coupe axiale d'un autre mode de réalisation du raccordement, la bague de verrouillage étant en position de déverrouillage et en position de verrouillage respectivement ;
- Les figures 9 et 11 sont des vues de dessus de ce même raccordement, pour les mêmes positions respectives de la bague de verrouillage ;
- Les figures 12 et 13 sont des vues en coupe axiale d'un autre mode de réalisation du raccordement de tubulures, pour deux étapes successives de la mise en place du collier de verrouillage ;
- La figure 14 est une vue de dessus correspondant à la figure 13 ;
- La figure 15 est une vue en perspective d'un autre type de collier de verrouillage ;
- La figure 16 est une vue en perspective montrant le collier de la figure 15 mis en place sur les tubulures à raccorder ;
- La figure 17 est une vue partielle en perspective, à plus grande échelle, relative à une variante du collier de la figure 15 ; et
- La figure 18 est une vue analogue à la figure 15, relative à une autre variante du collier.

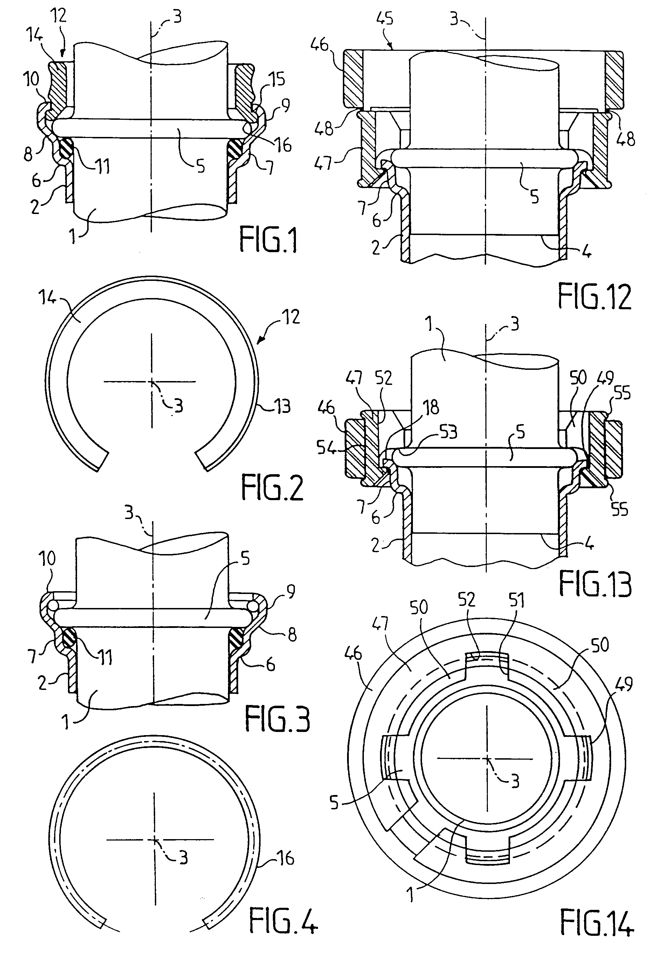

Dans la description ci-après, les termes "haut", "bas", "supérieur" et "inférieur" s'entendent par référence à la disposition des tubulures telle qu'illustrée aux figures 1, 3, 5, 6, 8, 10, 12, 13 et 16, dans laquelle les tubulures mâle et femelle s'étendent respectivement vers le haut et vers le bas par rapport à la région de raccordement.

Dans tous les modes de réalisation illustrés, une région d'extrémité d'une tubulure mâle 1 s'emboîte dans une région d'extrémité d'une tubulure femelle 2, ces deux régions d'extrémités étant de révolution autour d'un même axe 3. La tubulure 2 est par exemple une tubulure d'entrée ou de sortie d'un échangeur de chaleur appartenant à un circuit de chauffage ou de refroidissement dans un véhicule automobile. La tubulure 1 est alors une conduite destinée à relier l'échangeur de chaleur à un autre élément du circuit. La tubulure 1 présente, à une certaine distance de son extrémité de raccordement 4, une collerette radialement extérieure 5 formée par un bourrelet de sa paroi. Au voisinage de l'extrémité 4, la tubulure femelle 2 entoure la tubulure mâle avec un faible jeu, puis s'écarte de celle-ci, au voisinage de la collerette 5, par un épaulement 6 se raccordant à une région cylindrique élargie 7 dont le diamètre intérieur est inférieur au diamètre extérieur de la collerette 5. Au-delà de cette région 7, la paroi de la tubulure 2 s'évase de nouveau. Dans les modes de réalisation des figures 1 et 3, une région tronconique 8 relie la région cylindrique 7 à une autre région cylindrique 9 de diamètre intérieur plus grand que le diamètre extérieur de la collerette 5, qui s'étend axialement au-delà de cette dernière, et se poursuit à son tour par un rebord 10 tourné radialement vers l'axe 3, qui définit l'extrémité libre ou extrémité de raccordement de la tubulure 2. L'épaulement 6, la région cylindrique 7, la collerette 5 située axialement en regard de l'épaulement 6, et la paroi de la conduite 1 si-tuée axialement en regard de la région 7, définissent un logement annulaire pour un joint torique d'étanchéité 11, dont le serrage axial est limité par la venue en butée de la collerette 5 sur la région tronconique 8 de la tubulure 2.

Dans l'exemple des figures 1 et 2, la collerette 5 est sollicitée contre la région tronconique 8 par une pièce de verrouillage profilée 12 incurvée selon un arc de cercle supérieur à 3/4 de tour. La pièce 12 est réalisée par moulage en une matière plastique élastique, et présente un jonc 13 à profil en arc de cercle, qui s'insère radialement entre la collerette 5 et la région cylindrique 9, et axialement entre la collerette 5 et le rebord 10, et une jupe 14 de diamètre extérieur plus petit que celui du jonc 13, qui s'étend axialement au-delà de l'extrémité 10 de la tubulure 2. Le jonc 13 est en contact avec le rebord 10 et avec la collerette 5 respectivement par des surfaces continues 15 et 16 s'étendant chacune sur toute la longueur circonférentielle de la pièce 12. En pinçant radialement la jupe 14, on peut rétreindre élastiquement la pièce 12, réduisant le diamètre extérieur du jonc 13 au-dessous du diamètre intérieur du rebord 10 et permettant ainsi au jonc de franchir ce dernier pour atteindre son logement. Auparavant, la tubulure 1 a été mise en place dans la tubulure 2 en faisant passer la collerette 5 à travers l'ouverture du rebord 10, dont le diamètre est supérieur à son diamètre extérieur.

La variante des figures 3 et 4 diffère de la réalisation qui vient d'être décrite en ce que la pièce plastique 12 est remplacée par un simple jonc en acier 16 de section circulaire, qui se met en place et se loge de la même façon que le jonc 13 de cette pièce.

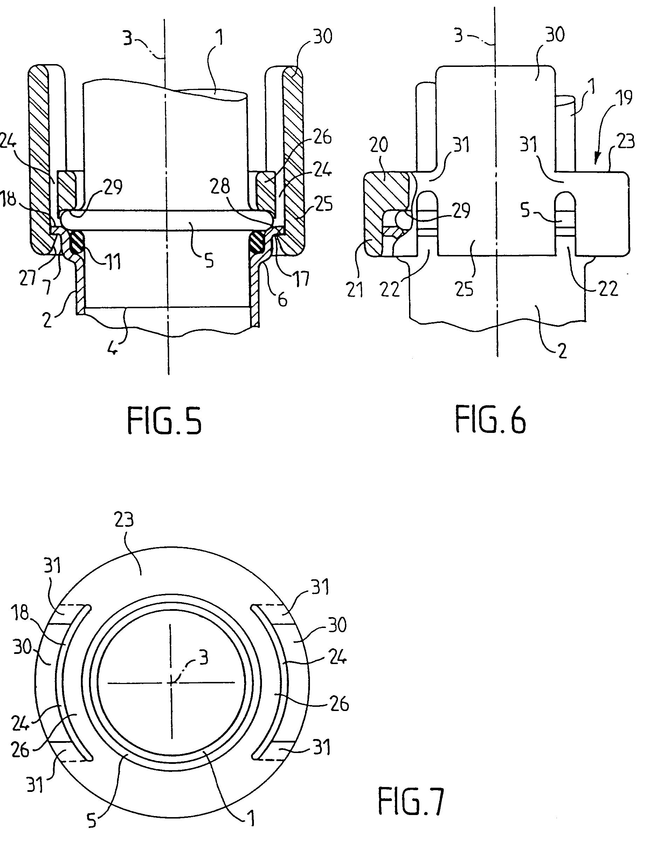

Dans le mode de réalisation des figures 5 à 7, la région d'extrémité de la tubulure femelle 1 est identique à celle précédemment décrite. En revanche, la région cylindrique 7 de la tubulure femelle 2 se raccorde directement, par un arrondi 17, à un rebord 18 tourné radialement vers l'extérieur, qui définit l'extrémité de raccordement de la tubulure 2. C'est sur l'arrondi 17 que s'appuie la collerette 5 de la tubulure 1 pour limiter le serrage du joint 11. La pièce de verrouillage 19 est moulée en matière plastique élastique. Elle présente une configuration annulaire autour de l'axe 3 des tubulures, son profil comportant sur une partie notable de la circonférence, comme montré en coupe du côté gauche de la figure 6, une forme en L comportant une branche 20 tournée radialement vers l'axe 3 et s'appuyant sur la collerette 5, et une branche 21 tournée axialement vers la tubulure 2 et passant radialement à l'extérieur de cette même collerette et du rebord 18, dont la tranche libre est sensiblement en contact avec le côté intérieur de cette branche. Quatre encoches 22, diamétralement opposées deux à deux, sont ménagées dans toute l'épaisseur radiale et sur toute la hauteur axiale de la branche 21, et se prolongent sur une partie de l'épaisseur axiale de la branche 20, pour se terminer à une faible distance de la face supérieure plane 23 de celle-ci (tournée axialement à l'opposé de la tubulure 2). Les encoches 22 sont reliées deux à deux par deux fentes circonférentielles 24 qui divisent radialement le profil de la pièce 19 en une portion extérieure 25 ayant l'épaisseur radiale de la branche 21 et une portion radialement intérieure 26. Au niveau de l'extrémité libre de la branche 21, c'est-à-dire vers le bas de la figure 5, chaque portion 25 présente, sur toute sa longueur circonférentielle, une saillie 27 tournée radialement vers l'intérieur qui possède une surface de contact 28 sur laquelle s'appuie la face radiale du rebord 18 tourné à l'opposé de la collerette 5. Ce rebord et cette collerette sont ainsi serrées axialement entre les deux surfaces de contact 28 et une surface de contact annulaire continue 29 définie par la branche 20 du profil en L et les portions 26 de la pièce 19. A l'opposé de la saillie 27, chaque portion 25 se prolonge axialement, au-delà de la face 23, par un bras de manoeuvre 30. La portion 25, la saillie 27 et le bras 30 forment une aile qui est reliée au reste de la pièce 19 par deux régions amincies 31, comprises chacune entre le fond d'une encoche 22 et la face 23, qui définissent pour cette aile un axe de pivotement orienté tangentiellement. En sollicitant l'un vers l'autre les deux bras 30, on peut faire pivoter les deux ailes autour de cet axe, écartant ainsi l'une de l'autre les saillies 27 et permettant de les faire passer en regard de la tranche du rebord 18 pour la mise en place de la pièce 9, préalablement disposée autour de la tubulure 1, sur la tubulure 2.

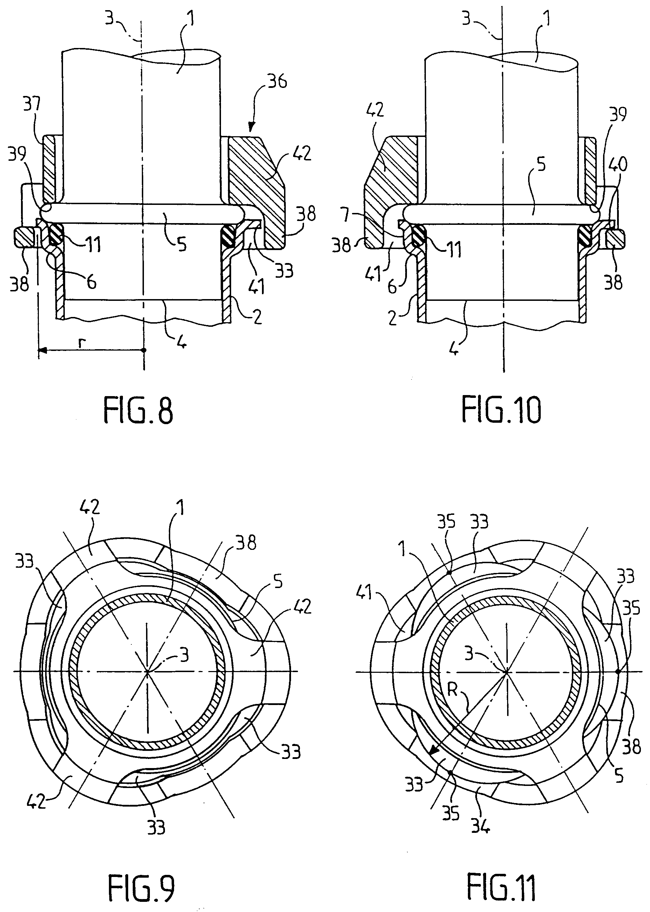

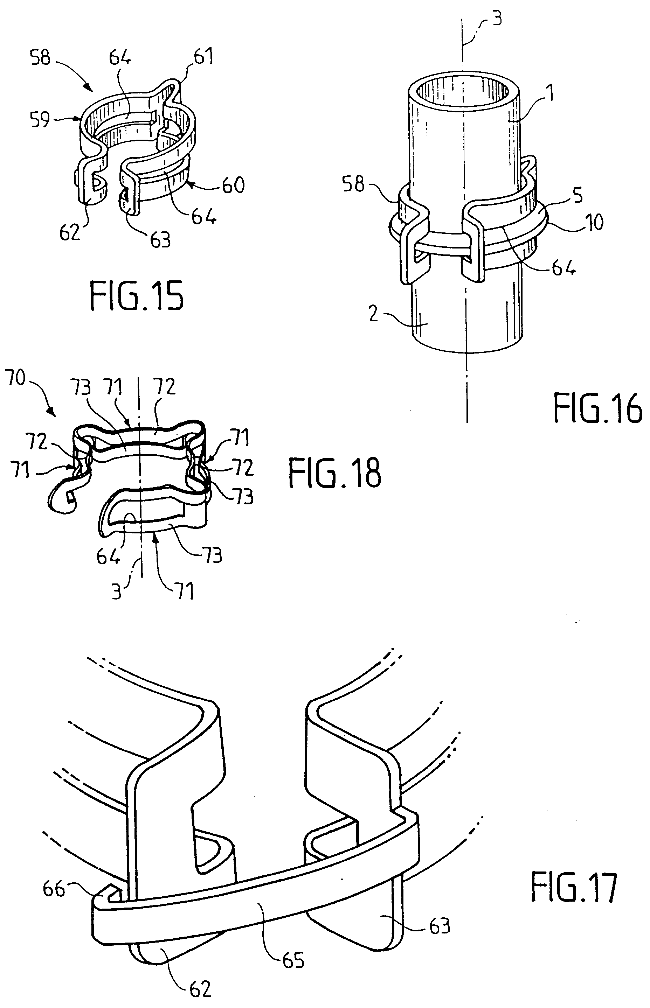

Dans le mode de réalisation des figures 8 à 11, la tubulure femelle 2 diffère de celle des figures 5 à 7 en ce que le rebord définissant l'extrémité libre n'est plus de révolution autour de l'axe 3, mais est formé de trois segments séparés 33 s'étendant chacun sur un arc inférieur à 120° et disposés à des intervalles angulaires de 120° autour de l'axe 3. La distance R entre ce dernier et la tranche libre 34 de chaque segment 33 va en diminuant, dans la direction circonférentielle, de part et d'autre d'un point médian 35. La pièce de verrouillage est une bague 36 en matière plastique moulée qui présente, comme la tubulure 2, une symétrie ternaire autour de l'axe 3. La bague 36 comprend une couronne supérieure 37 et une couronne inférieure 38 situées respectivement, dans la direction axiale, à l'opposé du plan des segments 33 par rapport à la collerette 5 et à l'opposé de la collerette 5 par rapport au plan des segments 33. La couronne 37, de révolution autour de l'axe 3, présente un profil allongé dans la direction axiale, son diamètre extérieur étant inférieur à celui de la collerette 5. Cette couronne vient en appui sur la collerette par une surface de contact annulaire continue 39. La couronne 38, qui n'est pas de révolution, présente un profil rectangulaire sensiblement uniforme. Dans la position angulaire illustrée aux figures 8 et 9, la face radialement intérieure de la couronne 38 suit, avec un petit intervalle radial, le contour de l'extrémité de raccordement de la tubulure 2. Le rayon intérieur de cette couronne est donc plus grand en regard des segments 33 qu'entre ceux-ci. Il est alors possible de faire coulisser la bague 36 le long de la tubulure 1 pour amener la surface 39 de la couronne 37 en appui sur la collerette 5. Si on fait pivoter ensuite la bague 36 d'un sixième de tour autour de l'axe 3, elle vient dans la position des figures 10 et 11 où les régions de plus faible rayon de la couronne 38 viennent axialement en regard des segments de rebord 33. La couronne 38 s'appuie donc sur chacun de ces segments par une surface de contact 40. Dans la position de déverrouillage des figures 8 et 9, au contraire, les segments 33 sont en regard d'évidements 41 de la bague 36, formés radialement vers l'intérieur par rapport aux trois régions de la couronne 38 les plus éloignées de l'axe 3. Chacune de ces régions est reliée à la couronne 37 par une branche de liaison 42, établissant ainsi l'unité de la pièce 36.

Dans le mode de réalisation des figures 12 à 14, la tubulure femelle 2 est identique à celle illustrée aux figures 5 à 7. A la figure 12, les tubulures 1 et 2 sont représentées dans leur position de raccordement, entourées par une pièce en matière plastique moulée 45. Cette pièce comprend une partie annulaire 46 et une partie en forme de collier ouvert 47, se succédant dans la direction de l'axe 3 et reliées entre elles par des pattes minces 48 réparties autour de celui-ci. Ces deux parties sont destinées à être séparées par rupture des pattes 48, pour former un collier de verrouillage 47 et une bague de retenue 46 illustrés aux figures 13 et 14. Le collier 47 a une forme quasi-annulaire, interrompue sur une longueur d'arc de quelques degrés pour permettre de l'écarter élastiquement. Il présente sur toute sa longueur circonférentielle un épaulement interne radial 49 tourné vers le haut, définissant une surface de contact pour le rebord 18 de la tubulure femelle 2. Des segments 50 font saillie radialement vers l'axe 3 à une petite distance au-dessus de l'épaulement 49, ces segments étant séparés les uns des autres dans la direction circonférentielle par quatre encoches 51 disposées à des distances angulaires mutuelles de 90°. Le fond 52 de chaque encoche appartient à la surface cylindrique de révolution limitant extérieurement l'épaulement 49 et à partir de laquelle font saillie les segments 50. Les encoches 51 facilitent l'écartement élastique du collier. La face inférieure de chaque segment 50 s'étend radialement jusqu'à la collerette 5 de la tubulure 1 pour définir la surface de contact 53 avec celle-ci. La face radialement extérieure du collier 47 comporte une région médiane cylindrique de révolution 54 qui épouse la face intérieure cylindrique de révolution de la bague 46, limitée par des nervures haute et basse 55 qui empêchent tout glissement de la bague dans la direction axiale.

Le collier de verrouillage 58 illustré aux figures 15 et 16 est réalisé à partir d'une bande de tôle d'acier incurvée notamment selon deux arcs de cercle 59 et 60 représentant chacun un peu moins d'un demi-cercle, ces deux arcs de cercle ayant un même axe qui correspond, à l'état monté comme représenté à la figure 16, à l'axe 3 des tubulures à raccorder. La largeur de la bande est orientée parallèlement à cet axe. Les régions en arcs de cercle 59 et 60 sont raccordées entre elles par une réglon en U 61 faisant saillie radialement vers l'extérieur, et se raccordent, à l'opposé de la région 61, à des régions d'extrémités respectives 62, 63 de la bande qui font également saillie radialement vers l'extérieur. Une fente 64 est ménagée sur toute la longueur circonférentielle de chacune des régions en arcs de cercle 59 et 60, à mi-largeur de la bande. Les fentes 64 se prolongent dans la région en U 61, sans se rejoindre, et dans les régions d'extrémités 62, 63, sans atteindre les extrémités de la bande, mais sur une distance radiale suffisante pour loger le profil de la collerette 5 et du rebord 10 lorsque le collier est monté sur les tubulures 1 et 2 mutuellement emboîtées, les régions en arcs de cercle 59 et 60 entourant les parois des tubulures et les bords supérieur et inférieur des fentes 64 définissant les surfaces d'appui du collier sur la collerette 5 et sur le rebord 10 respectivement. Les parties du collier situées au-dessus et au-dessous des fentes 64 sont reliées entre elles au niveau de la région en U 61 et des extrémités de la bande. La région 61 améliore l'élasticité du collier tout en renforçant celui-ci.

Dans la variante du collier illustré à la figure 17, la région d'extrémité 63 se prolonge par une patte 65 de largeur réduite par rapport à la bande, qui est recourbée en direction de la région d'extrémité 62 et se termine par un crochet 66 propre à s'accrocher sur cette dernière, empêchant les régions 62 et 63 de s'écarter l'une de l'autre et bloquant le collier dans sa position de verrouillage.

Dans le collier des figures 15 à 17, chacune des régions en arc de cercle 59 et 60 est incurvée selon une surface cylindrique unique. Ce collier convient donc lorsque les zones de contact avec la collerette de la tubulure mâle et avec le rebord de la tubulure femelle sont situées à la même distance de l'axe 3.

Le collier de la figure 18 est modifié pour s'adapter à des tubulures dans lesquelles, comme c'est le cas aux figures 1 à 14, le rebord est situé au-delà de la collerette par rapport à l'axe. Ainsi, dans chacune des régions en arcs de cercle 71, qui sont par ailleurs ici au nombre de quatre, la partie 72 de la bande située au-dessus de la fente 64 est incurvée selon un rayon plus petit que la partie 73 située au-dessous de celle-ci. Les régions en arcs de cercle 71 sont reliées entre elles par trois régions en U 61 semblables à celle du collier des figures 15 et 16. Ces trois régions en U augmentent encore la souplesse du collier.

## Revendications

1. Procédé pour le raccordement coaxial bout à bout de deux tubulures dans un circuit de fluide, par emboîtement d'une région d'extrémité d'une première (1) desdites tubulures dans une région d'extrémité de la seconde tubulure (2), la région d'extrémité de la seconde tubulure présentant un épaulement intérieur (6) tourné vers son extrémité de raccordement et un rebord radial (10) décalé vers cette même extrémité par rapport à l'épaulement, et la région d'extrémité de la premièree tubulure présentant une collerette (5) radialement extérieure propre à venir axialement en regard dudit épaulement, procédé dans lequel on sollicite axialement l'un vers l'autre ledit épaulement et ladite collerette, en serrant entre eux de façon étanche au fluide un joint annulaire d'étanchéité (11), caractérisé en ce qu'on sollicite l'un vers l'autre l'épaulement et la collerette au moyen d'une pièce de verrouillage (12) qui vient en contact avec le rebord, et avec la collerette, chacun par une ou plusieurs surfaces de contact (15, 16) s'étendant sur plus d'une demi-circonférence autour de l'axe (3) de raccordement, la pièce de verrouillage étant déformée ou déplacée par rapport à l'une au moins des deux tubulures pour passer d'une position de déverrouillage, permettant son assemblage avec cette dernière tubulure, à sa position de verrouillage.

2. Procédé selon la revendication 1, caractérisé en ce que la collerette vient en butée axiale sur la face interne de la région d'extrémité de la seconde tubulure pour limiter le serrage du joint.

3. Procédé selon l'une des revendications 1 et 2, caractérisé en ce que ledit rebord (10) est tourné vers l'axe (3) et situé axialement au-delà de la collerette par rapport à l'épaulement, et que la pièce de verrouillage (12) tend à écarter l'un de l'autre le rebord et la collerette.

4. Procédé selon la revendication 3, caractérisé en ce que la pièce de verrouillage est un profilé (12) incurvé autour de l'axe selon un arc de cercle dépassant un demi-cercle et comporte un jonc (13) qui vient s'insérer entre le rebord et la collerette, la position de déverrouillage étant obtenue par un rétreint élastique qui rend le diamètre extérieur du jonc inférieur au diamètre intérieur du rebord.

5. Procédé selon l'une des revendications 1 et 2, caractérisé en ce que ledit rebord (18) est tourné à l'opposé de l'axe (3) et situé axialement en-deçà de la collerette (5) par rapport à l'épaulement (6), et que la pièce de verrouillage (19) tend à rapprocher l'un de l'autre le rebord et la collerette.

6. Procédé selon la revendication 5, caractérisé en ce que la pièce de verrouillage (19) présente une configuration annulaire et comporte quatre zones (31) de section réduite délimitant deux ailes diamétralement opposées et définissant pour celles-ci des axes de pivotement par rapport au reste de la pièce, orientés tangentiellement, chaque aile présentant, de part et d'autre de son axe de pivotement dans la direction de l'axe de raccordement, une saillie d'accrochage (27) définissant une surface de contact (29) avec le rebord (18), et un bras de manoeuvre (30), le rapprochement mutuel des deux bras de manoeuvre amenant élastiquement la pièce dans sa position de déverrouillage.

7. Procédé selon la revendication 5, caractérisé en ce que le rebord comprend *n* régions (33) radialement en saillie, *n* étant un nombre entier supérieur à 1, réparties autour de l'axe de raccordement (3) et coopérant avec des surfaces de contact respectives (40) de la pièce de verrouillage (36), et que la pièce de verrouillage, sous forme d'une bague, pivote d'un *n*ième de tour pour passer de sa position de déverrouillage, dans laquelle chacune desdites surfaces de contact est en regard d'un vide entre deux desdites régions en saillie et chacune de ces mêmes régions est en regard d'un évidement (41) de la bague, à sa position de verrouillage.

8. Procédé selon la revendication 7, caractérisé en ce que la bague de verrouillage comprend deux couronnes (38, 37) décalées l'une par rapport à l'autre dans la direction axiale et définissant les surfaces de contact avec le rebord (33) et avec la collerette (5) respectivement, le rayon intérieur de la première couronne étant inférieur au rayon maximal desdites régions en saillie (33) au droit des surfaces de contact avec celles-ci, et supérieur audit rayon maximal en des zones intermédiaires entre ces mêmes surfaces de contact pour définir lesdits évidements, les deux couronnes étant reliées entre elles par *n* branches (42) au droit desdits évidements.

9. Procédé selon la revendication 5, caractérisé en ce que la pièce de verrouillage est sous forme d'un collier ouvert (47), qu'on écarte pour l'amener dans sa position de déverrouillage où le rayon intérieur des surfaces de contact (49) avec le rebord (18) est supérieur au rayon extérieur de celui-ci.

10. Procédé selon la revendication 9, caractérisé en ce qu'après mise en place du collier de verrouillage (47) on glisse autour de celui-ci une bague de retenue (46) qui l'empêche de s'écarter de nouveau.

11. Procédé selon la revendication 10, caractérisé en ce que le collier de verrouillage (47) et la bague de retenue (46) forment initialement une seule pièce moulée (45) dans laquelle ils se font suite dans la direction axiale et sont mutuellement reliés par au moins un élément frangible (48).

12. Procédé selon la revendication 9, caractérisé en ce que le collier de verrouillage (58) est une bande dont la largeur est orientée selon l'axe de raccordement (3), incurvée autour de celui-ci pour former au moins deux régions en arcs de cercle (59, 60) reliées entre elles par une région en U (61) faisant saillie radialement vers l'extérieur, et terminée par deux régions d'extrémités (62, 63) qui font également saillie radialement vers l'extérieur, une fente (64) étant ménagée dans la bande le long de chaque région en arc de cercle, dont les deux bords définissent des surfaces de contact avec le rebord et avec la collerette respectivement.

13. Procédé selon la revendication 12, caractérisé en ce que chaque région en arc de cercle (71) présente des rayons différents de part et d'autre de la fente, correspondant à des rayons différents du rebord et de la collerette.

14. Procédé selon l'une des revendications 12 et 13, caractérisé en ce qu'après mise en place du collier de verrouillage on met en oeuvre un élément de retenue (65) qui empêche l'écartement mutuel des deux régions d'extrémités (62, 63) de la bande.

15. Circuit de fluide, notamment pour la circulation d'un fluide caloporteur dans un véhicule automobile, comprenant deux tubulures raccordées coaxialement bout à bout par le procédé selon l'une des revendications précédentes, une région d'extrémité d'une première (1) desdites tubulures étant emboîtée dans une région d'extrémité de la seconde tubulure (2), la région d'extrémité de la seconde tubulure présentant un épaulement intérieur (6) tourné vers son extrémité de raccordement et un rebord radial (10) décalé vers cette même extrémité par rapport à l'épaulement, et la région d'extrémité de la première tubulure présentant une collerette (5) radialement extérieure propre à venir axialement en regard dudit épaulement, ledit épaulement et ladite collerette étant sollicités axialement l'un vers l'autre, en serrant entre eux de façon étanche au fluide un joint annulaire d'étanchéité (11), au moyen d'une pièce de verrouillage (12) qui vient en contact avec le rebord, et avec la collerette, par une ou plusieurs surfaces de contact (15, 16) s'étendant sur plus d'une demi-circonférence autour de l'axe de raccordement.

16. Pièce de verrouillage (12) utilisable pour la mise en oeuvre du procédé selon l'une des revendications 1 à 14, présentant une ou plusieurs surfaces de contact (16) s'étendant sur plus d'une demi-circonférence autour d'un axe (3) et tournées dans un premier sens dans la direction de cet axe, pour venir en appui sur une collerette (5) d'une première tubulure (1), et une ou plusieurs surfaces de contact (15) s'étendant sur plus d'une demi-circonférence autour dudit axe et tournées dans le sens opposé au premier, pour venir en appui sur un rebord (10) d'une seconde tubulure (2) dans laquelle est emboîtée la première tubulure.

17. Pièce moulée (45) formant une pièce de verrouillage (47) selon la revendication 16 et une bague de retenue (46), qui se font suite dans une direction axiale et sont mutuellement reliés par au moins un élément frangible (48), cette pièce moulée convenant pour la mise en oeuvre du procédé selon la revendication 11.
